## Europäisches Patentamt
## European Patent Office
## Office européen des brevets

(19)

(11) Publication number: **0 022 742**
A1

(12)

# EUROPEAN PATENT APPLICATION

(21) Application number: **80630027.3**

(22) Date of filing: **14.07.80**

(51) Int. Cl.³: **B 65 G 69/04,** G 01 F 23/22, B 65 D 90/48

(30) Priority: **16.07.79 NL 7905533**

(43) Date of publication of application: **21.01.81 Bulletin 81/3**

(84) Designated Contracting States: **BE CH DE FR GB LI**

(71) Applicant: **Holterbosch, Johan Leo Maria, Moolenaarshoek 5, Bunnik (NL)**

(72) Inventor: **Holterbosch, Johan Leo Maria, Moolenaarshoek 5, Bunnik (NL)**

(74) Representative: **Weydert, Robert et al, Office Dennemeyer S.à.r.l. 21-25 Allée Scheffer P.O. Box 41, L-Luxembourg (LU)**

(54) **Dispersing vessel.**

(57) An apparatus for the lateral dispersing of a bulk material supplied by a conveyor means so as to obtain an optimal filling of a chamber receiving the bulk material. Under a bulk material dispersing rotor (5) a sensor (14) rotatable with the rotor is disposed. When the level of the bulk material reaches the sensor a signal is produced for controlling the bulk material supply means.

EP 0 022 742 A1

DISPERSING VESSEL

The invention relates to an apparatus for the lateral distribution of bulk material from a conveyor duct, such as a feed pipe, with the object of optimally filling a space with the bulk material, this apparatus comprising a rotary distributor mounted in the flow of the bulk material.

Apparatus for this type wherein the rotary distributor takes the form of a pan, disc or rotating scoops or the like driven by motor power or by the flow of bulk material is known. Lateral spreading of the material ensures that the circular area remaining unused around the center of the heap naturally formed by falling material (the slope depending on the nature of the material) is filled.

In large, stationary storage chambers, such as bunkers, silos, etc., level indicators which give a warning signal when the maximum level is reached and measures must be taken to halt the inflow may already be incorporated.

The invention concerns a dispersing vessel which can be attached to the outlet end of the conveyor duct, for example the feed pipe, and which itself is provided with a level-indicating device, to enable it to be used in situations where such indicators are not installed, and particularly in the case of freight cars, ships and the like.

The invention incorporates for this purpose, under the vessel, at least one sensor which is rotatable with the vessel and which can be pushed back by the bulk material, as soon as the latter's level has reached the level of the sensor, thereby changing its position relative to the vessel: a device then translates this position change into a signal to which for example, the material flow duct can react.

In a more specific embodiment of the invention the sensor may consist of a vanes mode with fins mounted concentrically under the dispersing vessel, and which may be moved round from a first position, determined by a first stop on the vessel and a spring, against the spring force, towards a second position, determined by a second stop where the signal-producing element is activated.

As long as the bulk material level is substantially below the vessel, the sensor will remain in the first position relative to the vessel and rotate along with the vessel. When the bulk material level has reached the sensor the latter will be pushed back, changing its position relative to the vessel towards the mentioned second position, where further relative rotation will be prevented by the second stop.

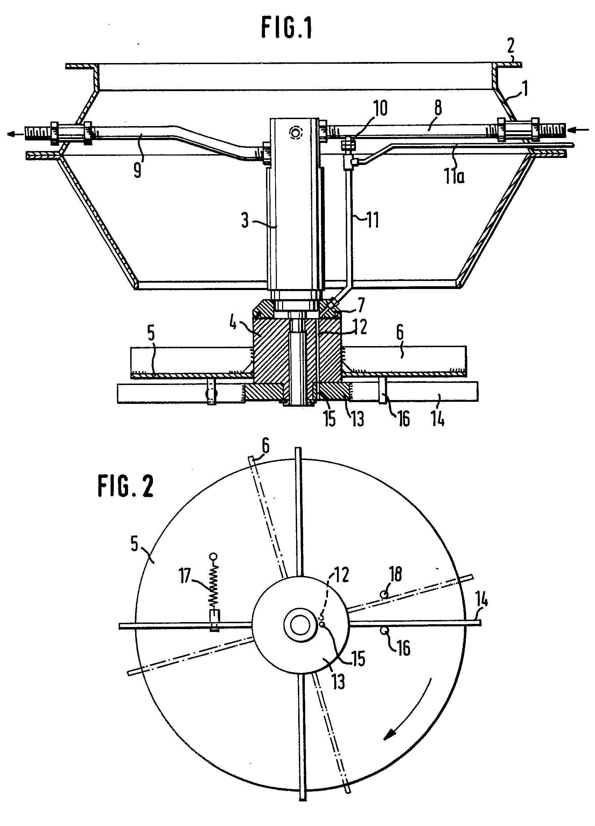

As shown in the drawings, in particular Figure 1, the dispersing vessel construction comprises a housing 1, which (by means of a coupling flange 2) may be attached to a conveyor duct such as gravity of feed pipe (not shown).

In the version shown in Figure 1 a rotor hub 4 is mounted centrally in the housing 1. The hub 4 carries a dispersing vessel 5 with blades 6. Between the rotor hub 4 and the stationary part of the motor 3 a sealing ring 7 is mounted.

Compressed air is supplied to the motor 3 through a compressed air feed pipe 8. Figure 1 also shows a compressed air discharge pipe 9.

From the compressed air supply feed pipe 8 a branchline 11 extends through a throttle opening 10; the pressure in the branch 11 can be observed by means of a measuring line 11a.

The branch 11 is connected to a channel 12 in the rotor hub 4. In the position shown in Figures 1 and 2 the lower end of the channel 12 is closed by the central ring 13 on which a number of arms 14 are mounted. The central ring 13 and the arms 14 form together a level indicator. In the central ring 13 there is a channel 15 which, with the ring 13 and the arms 14 in the position relative to the vessel 5 shown in Figure 2, is out of line with the channel 12 in the rotor 4. The first relative position of the arms 14 as illustrated in Figure 2 is determined by a stop 16 on the vessel 5 and a tension spring 17. In this position the arms are rotated along with the vessel 5. The bulk material dropping into the housing 1 is channelled out via the open bottom to the rotating dispersing vessel 5 which effects the lateral distribution of the bulk material.

If the vessel is driven by electricity it is preferable that the signal-indicator should be electric, although this does not strictly have to be the case. In that case the invention allows for the second stop to take the form of a limit switch.

If the vessel is air-operated a pneumatic signal-indicator may be used. A constructionally simple version thereof would be to construct, on the basis of the invention, a branch of the compressed air supply main to the air engine to extend through the vessel, and to make a hole in the sensor which will also line up, but only in the second position, with the branch; and the pressure in the branch is used as a signal. In the first position of the sensor the branch will be blocked and the pressure of the air in it will be at a certain level which may also be the same level as that of the main compressed air supply to the motor. In the second position the branch will be connected through the hole in the sensor with the atmosphere and the pressure drop in the branch can be registered, for example by a measuring line. As already mentioned the electrical signal-indicator does not have to be used solely in combination with an electrically driven vessel and even the use of the pneumatic signal-indicator need not be limited to air-operated vessels. Various combinations are possible, and include vessels which are turned not by a motor but by the falling bulk material.

In order to give a clearer picture of the invention some versions of the dispersing vessel are described below with reference to the accompanying drawings.

Figure 1 is a side view, partially in section, of a mobile dispersing vessel construction;

Figure 2 is a bottom view of the dispersing vessel shown in Figure 1;

Figure 3 is a side view, partially in section, of a modified version of the dispersing vessel, and

Figure 4 is a bottom view of the dispersing vessel shown in Figure 3.

As soon as the level of the bulk material touches the arms 14 they are pushed back in relation to the dispersing vessel 5 rotating in the direction indicated by the arrow in Figure 2, to the second position in relation to the vessel 5 which is shown by a broken line in Figure 2, where they are held by a second stop 18. In this second position the channel 15 in the central ring 13 is exactly in line with the channel 12 which extends through the rotor hub 4 and the branch 11 then comes into contact with the outside air. The pressure in the channel 11 can then drop, as can the pressure in the measuring line 11a, and this fall in pressure can be used as a control signal for the bulk material supply duct.

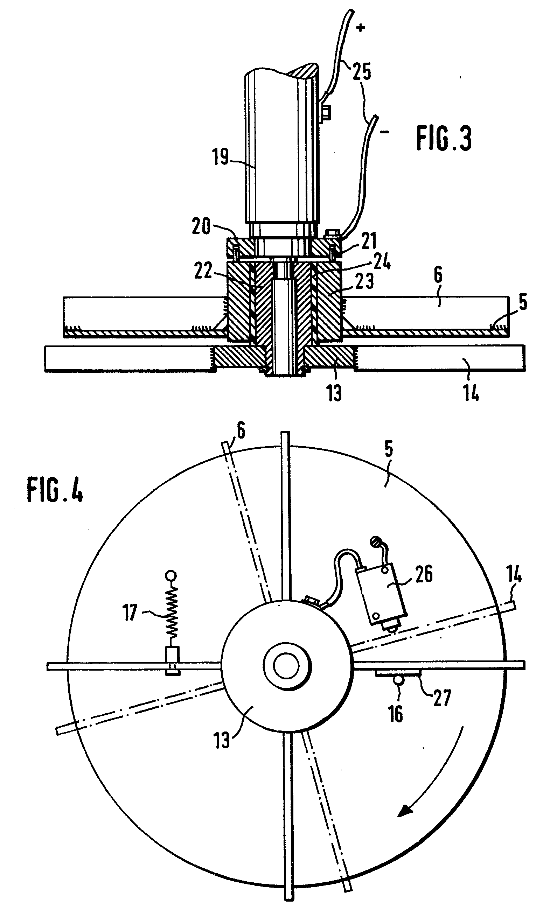

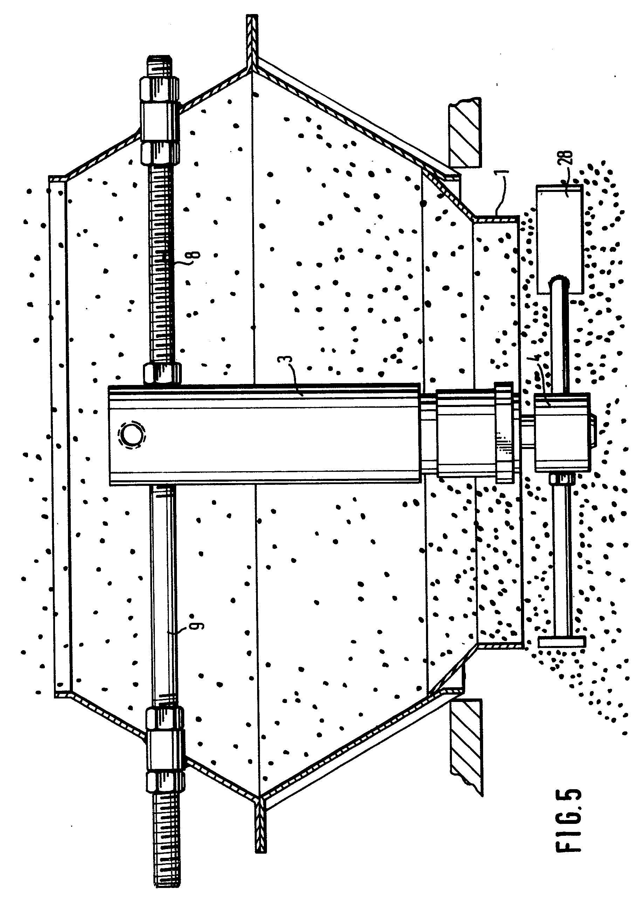

In the version shown in Figures 3 and 4 a press ring 20 is mounted on a shaft 19 with carbon brushes 21 and under the shaft 19 there is a rotor composed of an inner part 22 and an outer part 23. The inner part and the outer part are separated by an insolating bushing 24, and Figure 3 also shows electrical leads 25. As Figure 4 shows in this version with an electrically-driven dispersing vessel 5 the second stop 18 (in the version shown in Figures 1 and 2) is replaced by a limit switch 26 so that upon displacement of the level indicators 13, 14 in relation to the distribution vessel 5, 6 the limit switch 26 is operated and can transmit a control signal to the bulk material supply duct. In order to prevent the inner part 22 and the outer part 23 of the rotor being short-circuited via the level indicators 13, 14 an insolating plate is mounted on the arm at the point where it comes into contact with the first stop 16.

A further improvement of the dispersing vessel can be obtained by dispersing the vessel 5 and blades 6 as an open rotor in such a way that the blades 28 are mounted only at the circumference of the rotor. The blades 28 are disposed in such a way opposite the housing 1 that the blades 28 are immersed in the outside area of the heap of material. When the spreader starts its rotating movement only the material at the outer part of the heap of material is dispersed.

As compared with a completely closed dispersing vessel the above described construction takes substantially less power consumption and allows the application of a lower rotation speed which means a more gentle treatment of the material to be dispersed.

- 5 -

CLAIMS

1.    Apparatus for the lateral dispensing of a bulk material through a conveyor means, such as a filling tube, with the object of obtaining  an optimal filling of a chamber receiving the bulk material, said apparatus comprising a dispersing rotor mounted in the stream of the bulk material, characterized in that under the bowl type dispersing rotor or vessel at least one sensor is disposed which is rotatable together with the vessel and that the bulk material, as soon as the level thereof has reached the level of the sensor, can be braked down and thereby, for the regulation of the vessel the position is changed, and that means are provided which translate this position change into a signal whereupon for example the material supply means can be operated.

2.    Apparatus according to claim 1, characterized in that the sensor consists of a fan of fins which is mounted concentrically under the dispersing vessel and which from a first position, determined by a first abutment on the vessel and a spring, is rotatable against the spring force into a second position determined by a second abutment wherein the signal-indicator is put into operation.

3.    Apparatus according to claim 2, characterized in that the second abutment consists of an end switch.

4.    Apparatus according to claim 2 provided with a compressed air motor for driving the dispersing vessel characterized in that in the compressed air supply main at the air motor a branchline is provided which extends through the vessel, while in the sensor a passage-way is provided which only in the second position communicates with the branch-line and whereby the pressure in the branch-line can be utilized as signal.

5.    Apparatus according to claim 1 driven by an air or electrical motor provided with an at least partially open dispersing rotor with blades at the circumference,  said blades taking the material from the outer area of the heap of material and dispersing it.

# FIG.1

# FIG. 2

0022742

FIG.3

FIG.4

FIG.5

0022742

# European Patent Office

## EUROPEAN SEARCH REPORT

EP 80 63 0027

| Category | Citation of document with indication, where appropriate, of relevant passages | Relevant to claim |
|---|---|---|
| | **DOCUMENTS CONSIDERED TO BE RELEVANT** | |
| A | US - A - 3 490 619 (SALT COMPANY) <br> * Column 3; column 4, lines 1-28; figures 1,3 * | 1 |
| | GB - A - 832 827 (SIMON) <br> * Page 2, lines 14-31; figure 1 * | 1,4 |
| | US - A - 2 851 553 (GROSTICK) <br> * Column 3, lines 17-43; figures 1-3 * | 1,2,3 |
| | FR - A - 1 589 947 (RASTOIN) <br> * Abstract point 1, figure 1 * | 1 |
| | US - A - 2 276 382 (FRANCIS) <br> * Page 2, column 2, lines 13-75; page 3, column 1, lines 1-10; figures 2,6 * | 1 |

**CLASSIFICATION OF THE APPLICATION (Int. Cl.3)**

B 65 G 69/04
G 01 F 23/22
B 65 D 90/48

**TECHNICAL FIELDS SEARCHED (Int. Cl.3)**

B 65 G
B 01 F
G 01 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-10-1980 | OSTIJN |

EPO Form 1503.1   06.78